# EUROPÄISCHE PATENTSCHRIFT

(11) **EP 3 380 747 B1**
(45) Veröffentlichungstag und Bekanntmachung des Hinweises auf die Patenterteilung: **09.01.2019**
(21) Anmeldenummer: 17710527.7
(22) Anmeldetag: 13.03.2017
(51) Int. Cl.: F16F 13/14

(54) **HYDRAULISCH DÄMPFENDES LAGER**
HYDRAULICALLY DAMPING BEARING
PALIER À AMORTISSEMENT HYDRAULIQUE

(30) Priorität: 24.03.2016 DE 102016105633
(43) Veröffentlichungstag der Anmeldung: 03.10.2018
(73) Patentinhaber: Vibracoustic GmbH, 64293 Darmstadt (DE)
(72) Erfinder: WERNER, Philipp, 21339 Lüneburg (DE); KARDOES, Hilrich, 21423 Winsen (DE)
(74) Vertreter: Flügel Preissner Schober Seidel
(86) Internationale Anmeldenummer: PCT/EP2017/055804
(87) Internationale Veröffentlichungsnummer: WO 2017/162459

(56) Entgegenhaltungen:
- EP-A1- 0 304 349
- EP-A2- 0 164 887
- EP-A2- 2 253 863
- WO-A1-2012/002402

## Beschreibung

Die vorliegende Erfindung betrifft ein hydraulische dämpfendes Lager mit einem Lagerkern und einem Außenrohr, wobei sich der Lagerkern über eine Tragfeder aus einem elastomeren Material an dem Außenrohr abstützt, wobei die Tragfeder einen zwischen dem Lagerkern und dem Außenrohr gebildeten Raum in wenigstens zwei mit einem Fluid gefüllte Kammern unterteilt, die über wenigstens einen Dämpfungskanal und wenigstens einen Entkopplungskanal fluidleitend miteinander verbunden sind, wobei in dem Entkopplungskanal wenigstens eine verwindungssteife und plättchenförmige Entkopplungseinrichtung angeordnet ist, die durch Fluidströme hin und her bewegbar ist, und wobei die Entkopplungseinrichtung derart ausgebildet ist, dass während einer fluidbedingten Bewegung der Entkopplungseinrichtung deren Anströmseiten stets den Fluidströmen zugewandt sind.

Hydraulisch dämpfende Lager werden in Kraftfahrzeugen eingesetzt, um auftretende Schwingungen zu dämpfen und zu tilgen. Die hydraulischen Funktionen können auch in Buchsen implementiert werden, was aufgrund der vergleichsweise komprimierten Bauformen allerdings zu grundlegenden Designänderungen führt. Insbesondere werden derartige Lager als Fahrwerkslager oder als Motorlager eingesetzt. Die fluidgefüllten Kammern werden teilweise durch Elastomermembranen begrenzt. Ihre Blähsteifigkeit trägt bei dynamischer Belastung des Lagers signifikant zur Gesamtsteifigkeit des Lagers, der dynamischen Steifigkeit, bei.

Entkopplungseinrichtungen dienen bei Lagern der eingangs genannten Art zur Absenkung der dynamischen Steifigkeit für hochfrequente Anregungen kleiner Amplituden, Bei Schwingungen mit großer Amplitude verschließt das Entkopplungselement die Eintrittsöffnung des Entkopplungskanals am Entkopplungskäfig. Erst dann wird eine signifikante Menge an Fluid über den Dämpfungskanal gepumpt, wodurch eine Dämpfung der auftretenden Schwingungen bewirkt wird.

DE 43 05 173 C2 offenbart eine hydraulisch dämpfende Lagerbuchse mit einen hohlzylindrischen Lagerkern und einer Außenhülse. Der Lagerkern wird durch eine Tragfeder aus einem elastomeren Material abgestützt. Der Raum zwischen den Tragfedern nimmt zwei durch Tragstollen getrennte Kammern auf, die mit einer Flüssigkeit gefüllt sind. Die Kammern sind durch einen Dämpfungskanal und einen Entkopplungskanal miteinander verbunden. Der Entkopplungskanal weist einen Entkopplungskäfig auf, in dem ein kugelförmiges Entkopplungselement frei beweglich aufgenommen ist.

EP 0 304 349 A1 offenbart ein elastisches Gelenk, das zwei fluidgefüllte Kammern aufweist, die durch einen ersten Kanal und einen zweiten Kanal miteinander verbunden sind. Der zweite Kanal weist ein kugelförmiges Schließmittel auf, das sich in dem zweiten Kanal zwischen zwei Endpunkten mit reduzierten Kanaldurchmesser bewegen kann und bei Anliegen des Schließmittels an einen der Endpunkte den zweiten Kanal verschließen kann, Der Durchmesser des Schließmittels ist dabei kaum geringer als der Durchmesser des zweiten Kanals.

DE 197 32 123 A1 offenbart ein hülsenförmiges hydraulisch dämpfendes Radialgummilager mit mindestens zwei hydraulischen Arbeitskammern, die durch einen Drosselkanal und durch einen Bypasskanal miteinander verbunden sind, um Stoßamplituden zu dämpfen. In den Bypasskanal ist ein Entkopplungsglied eingebracht, das aus einem Entkopplungskäfig und einer eingelegten Elastomer-Lose besteht. Die Elastomer-Lose liegt dabei mit allen Seitenflächen an den umgebenden Wandflächen der Entkopplungskammer lose an. Dadurch kann die Resonanz des Lagers für kleine Amplituden in einen Frequenzbereich um 200 Hz verschoben werden, während das Lager im dargestellten Beispiel bei großen Amplituden eine Resonanz von ca. 40 Hz aufweist.

Die nicht kugelförmigen Entkopplungselemente der bekannten Lager sind jedoch derart ausgebildet, dass diese während des Betriebs verkanten oder verkippen können. Dadurch sind die Betriebssicherheit und die Funktion des Lagers bei kleinen Amplituden nur eingeschränkt gewährleistet.

Aus WO2012/002402 geht eine Hydrobuchse hervor, in dessen Entkopplungskanal eine zwischen zwei Platten aufgenommene, plättchenförmige Entkopplungseinrichtung angeordnet ist.

Ferner geht aus EP 0 304 349 A1 eine Hydrobuchse hervor, die einen Entkopplungskanal aufweist, in dem eine Entkopplungseinrichtung angeordnet ist, die aus einem Abschnitt des elastomeren Tragkörpers gebildet ist.

Des Weiteren geht aus EP 0 164 887 A2 ein Hydrolager hervor, dessen beide Arbeitskammern über einen Kanal miteinander verbunden sind, in dem ein Zylinder angeordnet ist.

Zudem zeigen hydraulische Simulationen, dass die Resonanzfrequenz in einem hydraulisch aktiven Kanal umso höher ist, je weniger Masse im Kanal schwingt, also je kürzer der Kanal im Verhältnis zu seinem Querschnitt ist. Für ein besonders gutes Ergebnis ist somit der Querschnitt des Entkopplungskanals zu maximieren und seine Länge bzw. die schwingende Masse zu minimieren. Allerdings ist die minimale Länge des Entkopplungskanals durch die Breite der Tragstollen begrenzt. Ein Maximieren des Querschnitts des Entkopplungskanals ist direkt an die Bauart der Lagerbuchse gebunden. So ist der zur Verfügung stehende Bauraum zwischen dem nach außen den Tragstollen begrenzenden und diesen fixierenden Teil des Führungskäfigs und dem Außenrohr festgelegt. Üblicherweise weist dieser Bauraum in radialer Richtung eine sehr geringe Höhe auf. Kugelförmige Entkopplungselemente nutzen somit den meist flachen, länglichen Querschnitt zwischen der Außenhülse und dem Käfig nicht optimal aus.

Der Erfindung liegt daher die **Aufgabe** zugrunde, ein hydraulisch dämpfendes Lager zu schaffen, das eine geringe dynamische Steifigkeit bei kleinen Amplituden und eine verbesserte Betriebssicherheit aufweist.

Zur **Lösung** dieser Aufgabe wird bei einem Lager der eingangs genannten Art vorgeschlagen, dass die Entkopplungseinrichtung quer zur Richtung der Fluidströme eine Höhe und eine Länge und in Richtung der Fluidströme eine Breite aufweist, wobei die Länge und Breite der Entkopplungseinrichtung größer als die Höhe der Entkopplungseinrichtung ist.

Der Erfindung liegt die Erkenntnis zugrunde, dass ein hydraulisch dämpfendes Lager der genannten Art, eine hohe Betriebssicherheit aufweist, da die Entkopplungseinrichtung unempfindlich gegenüber einem Verkippen und/oder Verdrehen während des Betriebs ist. Darüber hinaus kann die schwingende Masse im Entkopplungskanal über die Dichte der Entkopplungseinrichtung eingestellt werden, so dass die dynamische Steifigkeit des Lagers bei kleinen Amplituden bis hin zu hohen Frequenzen getuned werden kann. Zudem ist die Entkopplungseinrichtung bevorzugt derart ausgelegt, dass Schwingungen bis 60 Hz (z. B. Abrollgeräusche) in Einzelfällen auch bis zu 200 Hz entkoppelt werden. Die Entkopplungseinrichtung ist derart ausgebildet, dass sie den zur Verfügung stehenden Querschnitt besser als eine kugelförmige Entkopplungseinrichtung ausnutzt.

Im Sinne der vorliegenden Erfindung kann die Entkopplungseinrichtung auch als Entkopplungselement bezeichnet werden.

Vorteilhafte Ausgestaltungen des hydraulisch dämpfenden Lagers sind Gegenstand der abhängigen Ansprüche.

In vorteilhafter Ausgestaltung ist die Breite der Entkopplungseinrichtung mindestens doppelt so groß wie die Höhe der Entkopplungseinrichtung ist. Weiterhin vorteilhaft weist die Entkopplungseinrichtung quer zur Richtung der Fluidströme eine Höhe und quer zur Richtung der Fluidströme eine Länge auf, wobei die Länge der Entkopplungseinrichtung größer als die Höhe der Entkopplungseinrichtung ist, wobei vorzugsweise die Länge der Entkopplungseinrichtung mindestens dreimal so groß wie die Höhe der Entkopplungseinrichtung ist. Dadurch kann die Entkopplungseinrichtung die Form eines quer zur Fließrichtung ausgerichteten Zylinders und/oder eines Quaders beziehungsweise plättchenförmigen Elementes aufweisen.

In vorteilhafter Ausgestaltung ist die Länge der Entkopplungseinrichtung mindestens dreimal so groß wie die Höhe der Entkopplungseinrichtung, Dadurch weist die Entkopplungseinrichtung eine hohe Unempfindlichkeit gegenüber einem Verkippen und/oder einem Verdrehen während des Betriebs auf. Zudem dichtet die Entkopplungseinrichtung in ihrer Endposition die Eintrittsöffnungen ab, so dass kein Fluid mehr über den Entkopplungskanal strömen kann.

In vorteilhafter Ausgestaltung weist die Entkopplungseinrichtung in Richtung der Fluidströme eine Breite auf, und der Entkopplungskanal weist in Richtung der Fluidströme eine Länge auf, wobei das Verhältnis der Breite der Entkopplungseinrichtung zu der Länge des Entkopplungskanals zwischen ca. 0,3 bis ca. 1,0 beträgt, vorzugsweise zwischen ca. 0,45 bis ca. 0,75 beträgt. Die Länge des Entkopplungskanals ist dabei grundsätzlich durch den Abstand der Kammern vorgegeben. Durch Einbringen der Entkopplungseinrichtung kann die schwingende Masse im Entkopplungskanal jedoch verändert werden, ohne dessen Geometrie signifikant zu verändern. Vorteilhaft füllt die Entkopplungseinrichtung einen Innenraum des Entkopplungskanals fast vollständig aus. Die Resonanzfrequenz des Entkopplungskanals wird maßgeblich vom Querschnitt des Entkopplungskanals und der im Entkopplungskanal schwingenden Masse bestimmt. Bei gegebener Länge und gegebenem Querschnitt des Entkopplungskanals kann die schwingende Masse, welche in der Regel nahezu gleich der Masse der schwingenden Fluidsäule im Entkopplungskanal ist, durch die eingebrachte Entkopplungseinrichtung verändert werden. Je nach Ausbildung der Entkopplungseinrichtung ist es möglich, die schwingende Masse im Entkopplungskanal über weite Bereiche anzupassen. So ist es beispielsweise möglich, bei einem Entkopplungskäfig, bei dem der Abstand der ersten Kammer zur zweiten Kammer 20 mm beträgt, durch eine Entkopplungseinrichtung aus Stahl der Länge 15 mm eine schwingende Masse einzustellen, die einer Entkopplungskanallänge bzw. einer schwingenden Fluidsäule von ca. 120 mm entsprechen würde. Nimmt man beispielsweise die gleiche Entkopplungseinrichtung und führt sie als Integralschaum mit einer Dichte von 0,4 g/cm³ aus, so würde die schwingende Masse gegenüber einer reinen Fluidsäule der Länge 20 mm fast halbiert werden. Der Einsatz einer solchen Entkopplungseinrichtung mit geringer Dichte hat damit eine ähnliche Wirkung als ob die natürliche Länge des Entkopplungskanals von 20 mm auf 11 mm reduziert werden würde, obwohl die Geometrie des Entkopplungskanals selbst nicht verändert wird.

In vorteilhafter Ausgestaltung ist in den Entkopplungskanal ein Entkopplungskäfig eingebracht, in den die Entkopplungseinrichtung aufgenommen ist. Vorteilhafterweise sorgt der Entkopplungskäfig für eine präzise Anordnung der Entkopplungseinrichtung in dem Entkopplungskanal und verbessert die Verschlussfähigkeit der Durchgangsöffnungen durch die Entkopplungseinrichtung. Die Resonanzfrequenz des Entkopplungskanals kann ebenfalls durch das Einbringen des Entkopplungskäfigs in den Entkopplungskanal verändert werden. Der Entkopplungskäfig weist in Richtung der Fluidströme eine Breite und einen Querschnitt auf. Je nach Ausgestaltung des Entkopplungskanals kann die Resonanzfrequenz des Entkopplungskanals, in den ein Entkopplungskäfig eingebracht worden ist, angepasst werden.

Über die Dichte der Entkopplungseinrichtung kann die im Entkopplungskanal schwingende Masse bei gegebener Entkopplungskanalgeometrie zur effektiven Tunebarkeit des hydraulisch dämpfenden Lagers eingestellt werden. Geht man in der Modellvorstellung von der Schwingung einer reinen Flüssigkeitssäule im Entkopplungskanal aus, welche einen gegebenen Querschnitt und eine der Kanallänge entsprechenden Flüssigkeitssäulenlänge aufweist, so kann beispielsweise durch das Einbringen einer Entkopplungseinrichtung geringer Dichte die virtuelle Länge des Entkopplungskanals verkürzt werden. Außerdem sollten Verengungen in dem Entkopplungskanal, insbesondere am Anfang und am Ende des Entkopplungskanals beziehungsweise des Entkopplungskäfigs in Richtung der Fluidströme, eingebracht werden, um eine gute Abdichtung des Entkopplungskanals durch die Entkopplungseinrichtung in ihrer Endposition zu bewirken.

Weiterhin vorteilhaft füllt die Entkopplungseinrichtung den Innenraum des Entkopplungskäfigs fast vollständig aus.

Vorteilhaft weist der Innenraum des Entkopplungskäfigs in Richtung der Fluidströme eine Breite auf. Die Tunebarkeit der Frequenzlage steigt mit dem Verhältnis der Länge des Entkopplungskanals zur Breite der Entkopplungseinrichtung.

In einer vorteilhaften Ausgestaltung ist der Entkopplungskäfig an die Außenkontur des hydraulisch dämpfenden Lagers angepasst und füllt den Entkopplungskanal vollständig aus. So kann die schwingende Entkopplungseinrichtung, welche sich innerhalb des Entkopplungskäfigs befindet, einen großen Teil des im Entkopplungskanal schwingenden Volumens einnehmen, um so eine möglichst große Tunebarkeit des Entkopplungsverhaltens zu erreichen. Die Außenwände des Entkopplungskäfigs weisen Durchgangsöffnungen auf, sodass das Fluid den Entkopplungskanal durch den Entkopplungskäfig strömen kann.

In vorteilhafter Ausgestaltung weist der Entkopplungskäfig und/ oder die Entkopplungseinrichtung eine dem Außenrohr und/oder dem Lagerkern angepasste Krümmung auf.

In vorteilhafter Ausgestaltung ist die Entkopplungseinrichtung aus einem Metall hergestellt. Weiterhin bevorzugt ist die Entkopplungseinrichtung aus Stahl oder Aluminium hergestellt.

In vorteilhafter Ausgestaltung ist die Entkopplungseinrichtung aus einem Kunststoff, insbesondere aus einem integralen Polymerschaum oder einem mit Füllelementen gefüllten Polymercompound, hergestellt. Ein Integralschaum weist ein geringes mittleres Raumgewicht und gleichzeitig eine hohe mechanische Robustheit auf. Bevorzugt weist der integrale Polymerschaum ein Raumgewicht zwischen ca. 0,1 g/cm³ und ca. 1,0 g/cm³, besonders bevorzugt zwischen ca. 0,3 g/cm³ und ca. 0,5 g/cm³ auf. Die Füllelemente können als Glashohlkugeln ausgebildet sein. Ein mit Glashohlkugeln gefülltes Polymer weist eine geringere Dichte und gleichzeitig eine hohe mechanische Robustheit auf. Bevorzugt weist die Entkopplungseinrichtung, die aus einem mit Glashohlkugeln gefüllten Polymer gebildet ist, eine mittlere Dichte zwischen ca. 0,6 g/cm³ und ca. 1,1 g/cm³, besonders bevorzugt zwischen ca. 0,7 g/cm³ und ca. 0,9 g/cm³ auf. Ferner können die Füllelemente Glasfasern, Glaskugeln und/oder Metallpartikel sein. Derartige Füllelemente weisen eine hohe Dichte auf, so dass ein damit gefüllter Polymercompound ebenfalls eine hohe Dichte aufweist. Bevorzugt beträgt der Füllgrad derartiger Füllelemente in dem Polymercompound zwischen 20 Vol.-% und 80 Vol.- %, vorzugsweise 40 Vol.-% bis 60 Vol.-%.

In vorteilhafter Ausgestaltung ist die Entkopplungseinrichtung aus einem torsionssteifen Material hergestellt. Dadurch ist die Entkopplungseinrichtung unempfindlich gegenüber einer Verwindung während des Betriebs.

In vorteilhafter Ausgestaltung ist die Entkopplungseinrichtung als Hohlkörper ausgebildet.

In vorteilhafter Ausgestaltung ist die Entkopplungseinrichtung aus einem Material hergestellt, das eine geschlossene Oberfläche und in seinem Inneren eine hohe Porigkeit aufweist. Die Oberfläche der Entkopplungseinrichtung ist dabei vorteilhaft fluiddichtend und diffusionsstabil ausgeführt.

In vorteilhafter Ausgestaltung ist die Dichte der Entkopplungseinrichtung geringer oder gleich der Dichte des Fluides. Die im Entkopplungskanal schwingende Masse oder in der Modellvorstellung die virtuelle Länge einer schwingenden Fluidsäule kann dadurch gezielt reduziert werden. Aufgrund der reduzierten schwingenden Masse ist der Entkopplungskanal bis hin zu hohen Frequenzen wirksam.

In vorteilhafter Ausgestaltung ist die Dichte der Entkopplungseinrichtung größer oder gleich der Dichte des Fluides.

In vorteilhafter Ausgestaltung ist in die Tragfeder ein Fensterrohr eingebracht, das aus zwei Ringen gebildet ist, die über wenigstens einen Steg miteinander verbunden sind, wobei der Entkopplungskanal zwischen dem Steg und dem Außenrohr gebildet ist.

In vorteilhafter Ausgestaltung ist der Entkopplungskäfig in das Fensterrohr integriert. Somit ist der Entkopplungskäfig kein separat eingelegtes Element, sondern wird durch das Fensterrohr der Tragfeder und/oder der Tragfeder selbst ausgebildet. Da in diesem Fall der Entkopplungskäfig kein separates Bauteil ist, können Materialkosten gespart werden. Beispielsweise ist der Entkopplungskäfig materialeinheitlich und/oder einteilig mit dem Fensterrohr oder der Tragfeder ausgebildet.

In vorteilhafter Ausgestaltung bildet die Tragfeder und/oder das Fensterrohr eine Begrenzung für die Bewegung der Entkopplungseinrichtung. Dazu bildet die Tragfeder oder das Fensterrohr quer zur Richtung der Fluidströme eine Begrenzung beispielsweise in Form eines Gitters ähnlich eines Entkopplungskäfigs, das eine Bewegung der Entkopplungseinrichtung in Richtung der Fluidströme begrenzt.

In vorteilhafter Ausgestaltung weist der Entkopplungskäfig an der dem Lagerkern abgewandten Seite eine Aussparung auf. Die Entkopplungseinrichtung schwimmt somit in axialer Richtung in dem Fluid direkt zwischen dem Fensterrohr und dem Außenrohr, wird aber weiterhin in Umfangsrichtung durch den Entkopplungskäfig begrenzt.

In vorteilhafter Ausgestaltung weisen das Fensterrohr und/oder das Außenrohr mindestens einen Führungssteg in Umfangsrichtung und die Entkopplungseinrichtung mindestens eine Führungsnut in Umfangsrichtung auf, wobei der mindestens eine Führungssteg in die mindestens eine Führungsnut eingreift. Hierdurch wird eine Selbstzentrierung erzielt, die die Ventilwirkung unterstützt.

In vorteilhafter Ausgestaltung sind die Flächen der Entkopplungseinrichtung, die den Öffnungen des Entkopplungskanals oder des Entkopplungskäfigs zugewandt sind, derart ausgebildet, dass sie die Öffnungen des Entkopplungskanals oder des Entkopplungskäfigs fluiddicht verschließen.

In vorteilhafter Ausgestaltung ist die Entkopplungseinrichtung aus mehreren einzelnen Entkopplungselementen gebildet. Beispielsweise können mehrere einzelne Entkopplungselemente parallel geschaltet sein und, um so die Entkopplung noch wirksamer tunen zu können. Die parallel geschalteten Entkopplungselemente können zylinderförmig oder aus mehreren einzelnen Quadern mit rechteckigem Querschnitt gebildet sein. Die Quaderform der Entkopplungseinrichtung kann allerdings in Umfangsrichtung an die Krümmung des Entkopplungskanals angepasst sein.

In vorteilhafter Ausgestaltung können mehrere parallel geschaltete Entkopplungskanäle die beiden Kammern miteinander verbinden. Dabei können in jedem einzelnen Entkopplungskanal Entkopplungseinrichtungen vorgesehen sein. Ferner können in jedem Entkopplungskanal unterschiedliche Entkopplungseinrichtungen vorgesehen sein. Die unterschiedlichen Entkopplungseinrichtungen und/oder die einzelnen Entkopplungskanäle können sich in ihren räumlichen Ausmaßen sowie ihrer Form und damit in ihrer Resonanzfrequenz unterscheiden.

Nachfolgend wird das hydraulisch dämpfende Lager anhand der beigefügten Zeichnungen näher erläutert. Hierbei zeigen schematisch:
- Fig. 1: einen Vertikalschnitt durch ein erstes Ausführungsbeispiel eines hydraulisch dämpfenden Lagers;
- Fig. 2: einen Axialschnitt durch das hydraulisch dämpfende Lager entlang der Linie II-II von Fig. 1;
- Fig. 3: eine vergrößerte Darstellung der Einzelheit III in Fig.1;
- Fig. 4a: eine perspektivische Ansicht eines Entkopplungskäfigs mit einer Entkopplungseinrichtung in einer Offenstellung;
- Fig. 4b: eine perspektivische Ansicht eines Entkopplungskäfigs mit einer Entkopplungseinrichtung in einer Schließstellung;
- Fig. 5: einen Vertikalschnitt durch ein zweites Ausführungsbeispiel eines hydraulisch dämpfenden Lagers ohne Entkopplungskäfig;
- Fig. 6: einen Axialschnitt durch das hydraulisch dämpfende Lager entlang der Linie VI-VI von Fig. 5; und
- Fig. 7: eine perspektivische Ansicht einer zweiten Ausführungsform eines Entkopplungskäfigs.

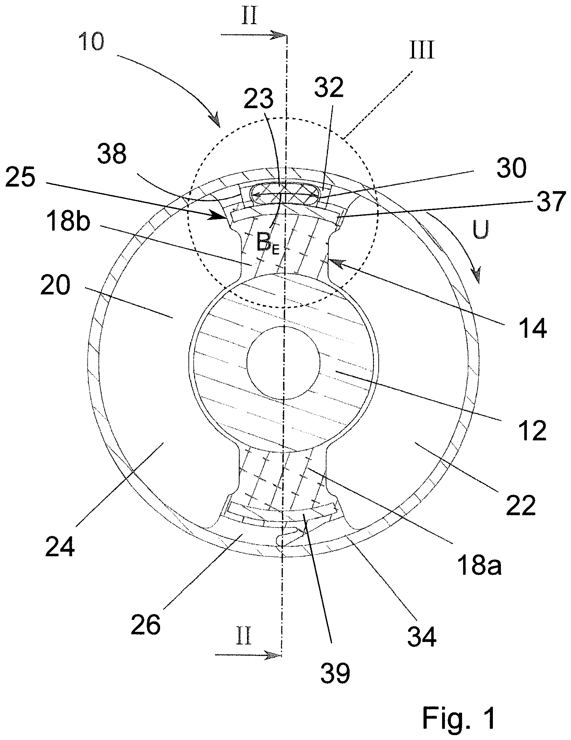

Die in den Fig. 1 bis 4 dargestellte Ausführungsform des hydraulisch dämpfenden Lagers 10 ist als eine zylinderförmige Lagerbuchse ausgebildet, die als Fahrwerkslager oder Aggregatelager eingesetzt wird.

Das Lager 10 weist einen hohlzylindrischen Lagerkern 12 auf, der über eine Tragfeder 14 an einem Außenrohr 34 abgestützt ist. Durch zwei in Radialrichtung verlaufende Tragstollen 18a, 18b der Tragfeder 14 werden zwei Kammern 20, 22 gebildet, die mit einem Fluid 24 gefüllt sind. Die Kammern 20, 22, die stirnseitig durch nicht dargestellte blähweiche Elastomermembranen begrenzt sind, stehen über einen Dämpfungskanal 26 und einen Entkopplungskanal 30 miteinander in Verbindung.

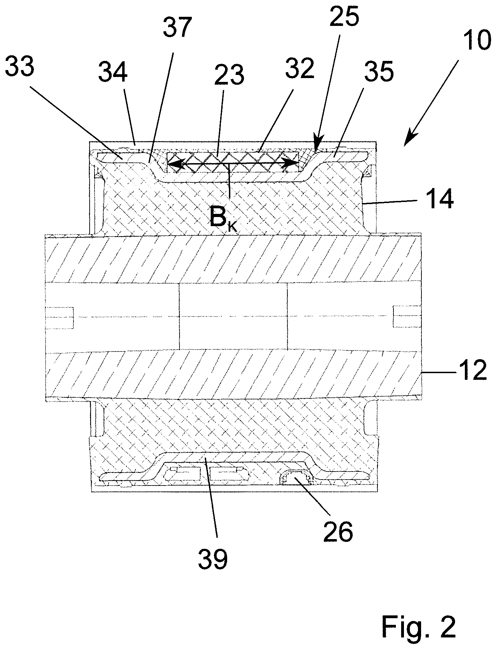

In den Tragstollen 14 ist ferner ein Fensterrohr 25 eingebracht. Das Fensterrohr 25 weist zwei Ringe 33, 35 auf, die durch zwei sich gegenüberliegende Stege 37, 39 miteinander verbunden sind, wie in Fig. 2 ersichtlich ist. Der Steg 37 bildet zusammen mit dem Außenrohr 34 den Entkopplungskanal 30.

In dem Entkopplungskanal 30 ist ein Entkopplungskäfig 32 eingebracht. Außerdem weist der Entkopplungskanal in Richtung der Fluidströme F eine Länge L_{K} und quer zur Richtung der Fluidströme F eine Breite B_{K} auf. Der Entkopplungskäfig 32 ist beispielsweise als einteiliges Kunststoffteil ausgebildet und zwischen dem Fensterrohr 25, insbesondere dem Steg 37 und dem Außenrohr 34 der Tragfeder 14 positioniert. In dem Entkopplungskäfig 32 ist eine Entkopplungseinrichtung 23 vorgesehen, die in Richtung der Fluidströme F eine Breite B_{E} und quer zur Richtung der Fluidströme F eine Länge L_{E} aufweist, wobei die Länge der Entkopplungseinrichtung L_{E} der Breite des Entkopplungskanals B_{K} entspricht oder geringfügig kleiner ist.

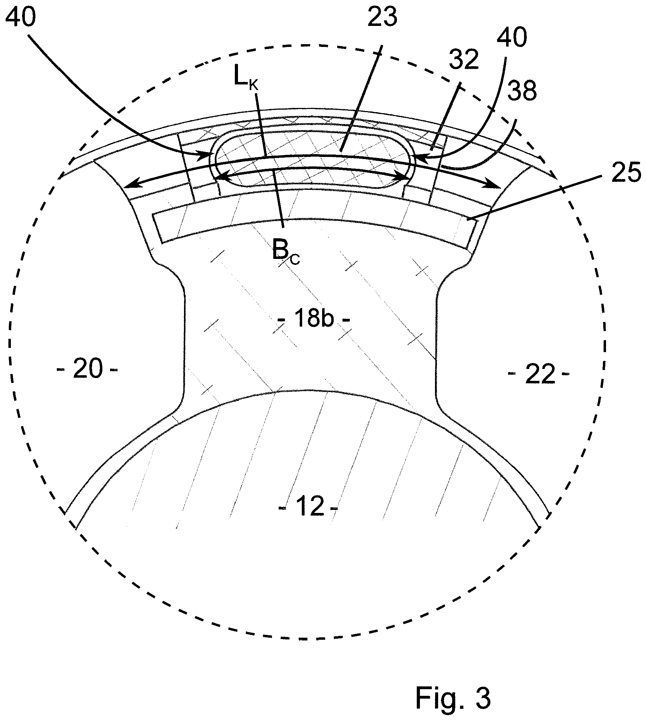

Fig. 3 zeigt einen vergrößerten Ausschnitt aus Fig. 1 im Bereich des Entkopplungskanals 30. Die in dem Entkopplungskäfig 32 angeordnete Entkopplungseinrichtung 23 ist von allen Seiten mit Fluid 24 umschlossen. Der Entkopplungskäfig 32 weist in seinem Innenraum in Richtung der Fluidströme F eine Breite B_{C} auf. Die Tunebarkeit der Frequenzlage steigt mit dem Verhältnis der Breite der Entkopplungseinrichtung B_{E} zu der Länge des Entkopplungskanals L_{K}.

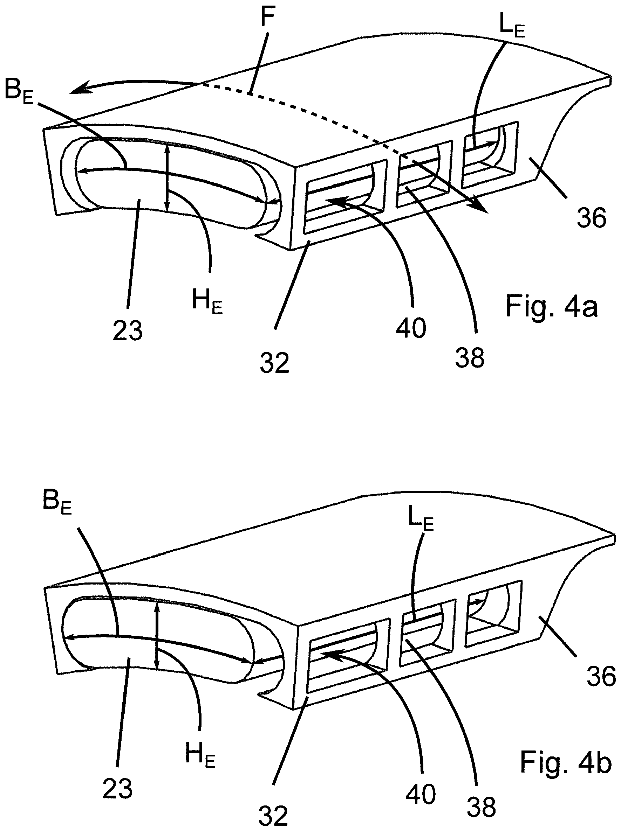

Wie insbesondere aus Fig. 4a und b hervorgeht, weist der Entkopplungskäfig 32 endseitig Gitterwände 36 auf, an denen Durchflussöffnungen 38 vorgesehen sind. In dem Entkopplungskäfig 32 ist eine Entkopplungseinrichtung 23 in Umfangsrichtung U mit Freiweg aufgenommen, die den Innenraum des Entkopplungskäfigs 32 fast vollständig ausfüllt. Dabei wird die Auslenkung der Entkopplungseinrichtung 23 durch den Entkopplungskäfig 32 begrenzt. Über das Spiel zwischen der Entkopplungseinrichtung 23 und der Gitterwand 36 des Entkopplungskäfigs 32 wird der Freiweg der Entkopplungseinrichtung 23 eingestellt und dessen Grenzamplitude definiert.

Der Entkopplungskäfig 32 und/oder die Entkopplungseinrichtung 23 können als separate Bauteile gefertigt werden und sind damit unabhängig von der vulkanisierten Tragfeder 14 einstellbar. Darüber hinaus kann der Entkopplungskäfig 32 in die Tragfeder 14 und insbesondere in das Fensterrohr 25 und dort insbesondere in den Steg 37, integriert sein.

Die Entkopplungseinrichtung 23 ist aus einem polymeren Integralschaum, beispielsweise aus thermoplastischen oder duroplastischen Polyurethanen, Polyetherimiden oder Polyethersulphon hergestellt. Auch kostengünstiges Polystyrol kann eingesetzt werden, wenn die Oberflächendicke so abgestimmt wird, dass eine zuverlässige Diffusionssperre erzeugt wird und die thermischen und mechanischen Belastungen, die auf die Entkopplungseinrichtung 23 einwirken, nicht allzu hoch sind. Grundsätzlich sind alle Polymere geeignet, welche eine gegenüber des umgebenden Fluids 24 diffusionsdichte Oberfläche bilden und bei den auftretenden Arbeitstemperaturen formstabil, auch unter den auftretenden Drücken und mechanischen Belastungen, etwa beim Anschlagen gegen die Gitterwände 36, sind. Die Entkopplungseinrichtung 23 weist eine geschlossene, robuste Oberfläche und im Innern eine hohe Porigkeit auf. Die Entkopplungseinrichtung 23 kann eine geringere Dichte als das Fluid 24 besitzen und damit eine geringe Massenträgheit aufweisen. Somit kann die Entkopplungseinrichtung 23 im Entkopplungskanal 30 der oszillierenden Fluidströmung bis hin zu hohen Frequenzen folgen. Die Entkopplungseinrichtung 23 kann auch eine höhere Dichte als das Fluid 24 aufweisen, um eine Entkopplung bei niedrigen Frequenzen zu ermöglichen. Demnach kann die Entkopplungseinrichtung aus Metall oder Kunststoff ausgebildet sein. Außerdem kann die Entkopplungseinrichtung als Hohlkörper ausgebildet sein.

Die Entkopplungseinrichtung 23 weist, wie in den Fig. 4a und 4b dargestellt ist, quer zur Richtung der Fluidströme F eine Höhe H_{E} auf. In Richtung der Fluidströme F weist die Entkopplungseinrichtung 23 eine Breite B_{E} auf. Außerdem weist die Entkopplungseinrichtung 23 quer zur Richtung der Fluidströme F eine Länge L_{E} auf. Dabei kann die Breite B_{E} mehr als doppelt so groß wie die Höhe H_{E} sein. Außerdem kann die axiale Länge L_{E} mehr als dreimal so groß wie ihre Höhe H_{E} sein. Durch die besondere Ausbildung der Entkopplungseinrichtung 23 wird die schwingende Masse im Entkopplungskanals 30 zur effektiven Tunebarkeit des hydraulisch dämpfenden Lagers 10 eingestellt. Es ist so möglich, die schwingende Masse im Entkopplungskanal 30 über weite Bereiche anzupassen und so die Resonanzfrequenz des Entkopplungskanals einzustellen. Dadurch sind die Anströmseiten 40 der Entkopplungseinrichtung 23 während einer fluidbedingten Bewegung stets den Fluidströmen F zugewandt, so dass die Entkopplungseinrichtung 23 unempfindlich gegenüber einem Verkippen und/oder einem Verdrehen während des Betriebs ist.

Die Entkopplungseinrichtung 23 ist vorwiegend plättchenförmig ausgebildet und weist in Richtung der Fluidströme F einen rechteckigen Querschnitt auf. Weiterhin weist die Entkopplungseinrichtung 23 eine dem Entkopplungskäfig 32 angepasste Krümmung auf, die ihrerseits der Krümmung des Außenrohrs 34 folgt. Die Entkopplungseinrichtung 23 füllt den Innenraum des Entkopplungskäfigs 32 fast vollständig aus. Hierdurch lässt sich die schwingende Masse im Entkopplungskanal 30 maximal tunen. Die Außenkontur der Entkopplungseinrichtung 23 ist an die Kontur der Innenseite der Gitterwand 36 angepasst. Hierdurch greifen die Flächen selbstzentrierend ineinander, wodurch der Entkopplungskanal 30 abgedichtet wird.

Anhand der Figuren 4a und 4b soll die Funktionsweise des Entkopplungskanals 30 erläutert werden.

Fig. 4a zeigt die Position der Entkopplungseinrichtung 23 in der Mittellage. Wird nun das Lager 10 mit einer Schwingungsamplitude angeregt, so findet ein Fluidaustausch zwischen den beiden Kammern 20, 22 statt. Fluid 24 strömt wechselseitig in den Entkopplungskanal 30 und somit durch die Durchflussöffnungen 38 in das Innere des Entkopplungskäfigs 32, schwämmt die Entkopplungseinrichtung 23 mit der Fluidsäule mit und strömt durch die gegenüberliegenden Durchflussöffnungen 38 wieder heraus. Ab einer Grenzamplitude schlägt die Entkopplungseinrichtung 23 schließlich an die begrenzenden Gitterwände 36 wechselseitig auf beiden Seiten an und verschließt so die Durchflussöffnungen 22 abwechselnd in Abhängigkeit der Fließrichtung. Einer dieser verschlossenen Zustände ist in Fig. 4b dargestellt. Ab einer definierten Menge an ausgetauschtem Fluidvolumen ist der Entkopplungskanal 30 geschlossen. Der weitere Fluidaustausch in derselben Fließrichtung innerhalb derselben Belastungsamplitude erfolgt nun ausschließlich über den Dämpfungskanal 26. Ab dieser Grenzamplitude wird anteilig Dämpfungsarbeit verrichtet und die dynamische Steifigkeit des Lagers steigt an.

Die Grenzamplitude wird so gewählt, dass die akustisch relevanten, kleinen Amplituden keinen Fluidaustausch über den Dämpfungskanal erfordern. Die Entkopplungseinrichtung 23 schlägt nicht an beide gegenüberliegende Gitterwände 36 an und schwingt weitestgehend unbehindert mit der Fluidsäule in dem Entkopplungskäfig 32. Hierdurch ist ein einfacher Fluidaustausch zwischen den Kammern 20, 22 gewährleistet und die Elastomermembranen, die die Kammern 20, 22 begrenzen, werden kaum aufgebläht. Eine geringe dynamische Steigifkeit ist die Folge, sodass die akustischen Übertragungseigenschaften des Lagers 10 verbessert sind.

Bei großen Amplituden muss hingegen der größte Teil des Fluidaustauschs zwischen den Kammern 20, 22 über den Dämpfungskanal 26 erfolgen. Der Tragstollen 14, welcher die Kammern 20, 22 begrenzen, werden stärker gebläht und tragen somit zur Gesamtsteifigkeit des Lagers 10 signifikant bei. Die dynamische Steifigkeit des Lagers 10, die von statischer Steifigkeit und der Blähsteifigkeit der Tragfeder 14 dominiert wird, ist somit hoch. Bevorzugt wird die Entkopplungseinrichtung 23 in der Art abgestimmt, dass ein wechselseitiges Anschlagen der Entkopplungseinrichtung 23 an beide gegenüberliegenden Gitterwände 36 durch den schwingungsbedingten Fluidaustausch zwischen den Kammern ab einer Grenzamplitude zwischen 0,01 mm und 0,05 mm erfolgt.

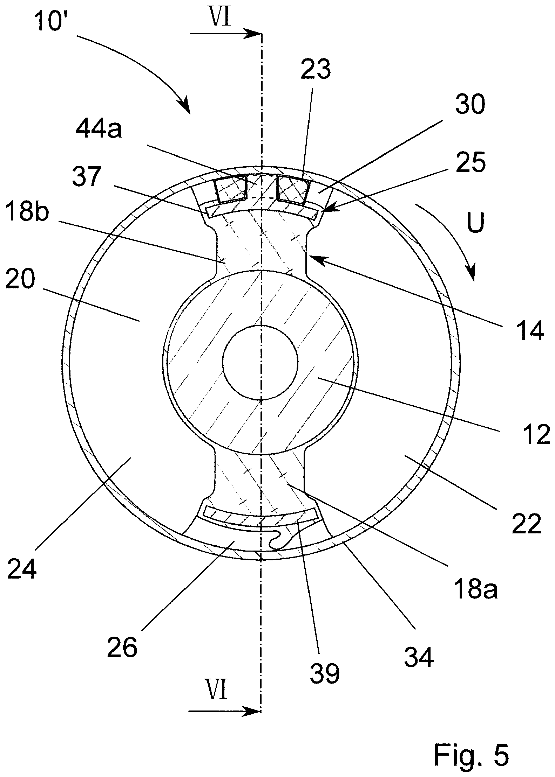

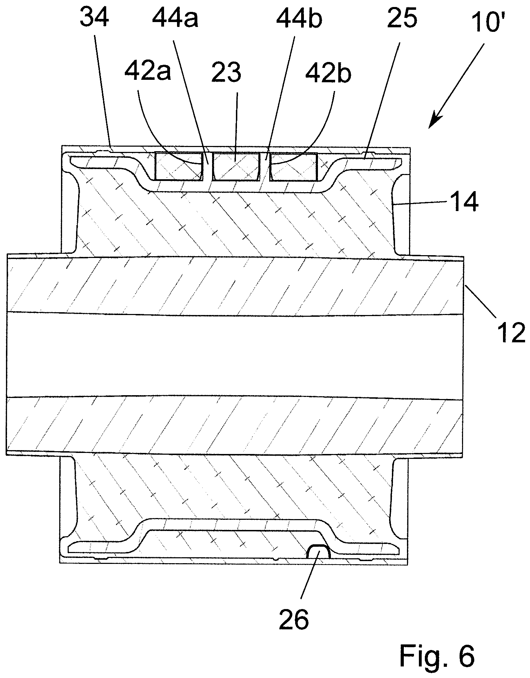

Nachfolgend wird eine zweite Ausführungsform des hydraulisch dämpfenden Lagers 10' erläutert, die in den Fig. 5 und 6 dargestellt ist. Zur Beschreibung werden die gleichen Bezugszeichen wie in der ersten Ausführungsform für gleiche oder funktionsgleiche Teile verwendet.

Das dargestellte hydraulisch dämpfende Lager 10' ist wie in der ersten Ausführungsform als zylinderförmige Lagerbuchse ausgebildet. Das Lager 10' weist einen hohlzylindrischen Lagerkern 12 auf, der über eine Tragfeder 14 an einem Au-ßenrohr 34 abgestützt ist. Durch zwei in Radialrichtung verlaufende Tragstollen 18a, 18b der Tragfeder 14 werden zwei Kammern 20, 22 gebildet, die mit einem Fluid 24 gefüllt sind. Die Kammern 20, 22 sind über einen Dämpfungskanal 26 und einen Entkopplungskanal 30 miteinander verbunden. Endseitig sind die Kammern 20, 22 durch nicht dargestellte blähweiche Elastomermembranen begrenzt.

Im Gegensatz zur ersten Ausführungsform ist in den Entkopplungskanal 30 kein Entkopplungskäfig 32 eingebracht. Vielmehr ist die Entkopplungseinrichtung 23 in einer Aussparung aufgenommen, die in die Tragfeder 14 eingeformt ist. Über das Spiel zwischen der Entkopplungseinrichtung 23 und der Tragfeder 14 wird der Freiweg der Entkopplungseinrichtung 23 eingestellt und dessen Grenzamplitude definiert.

Die Entkopplungseinrichtung 23 weist zwei in Axialrichtung beabstandete Führungsnuten 42a, 42b auf, die sich in Umfangsrichtung erstrecken. Außerdem weist das Außenrohr 34 auf der Oberseite, die der Entkopplungseinrichtung 23 zugewandt ist, zwei Führungsstege 44a, 44b auf, die sich in Umfangsrichtung und radial nach außen erstrecken. Diese Führungsstege 44a, 44b greifen in die Führungsnuten 42a, 42b ein. Das Zusammenspiel zwischen den Führungsnuten 42a, 42b und den Führungsstegen 44a, 44b sorgt für eine durchgehende Führung und Zentrierung der Entkopplungseinrichtung 23.

Die Entkopplungseinrichtung 23 der zweiten Ausführungsform weist die gleichen Materialeigenschaften wie die Entkopplungseinrichtung 23 der ersten Ausführungsform auf.

Wie in Fig. 5 zu sehen, weist die Entkopplungseinrichtung 23 eine dem Außenrohr 34 angepasste Krümmung auf. Die Entkopplungseinrichtung 23 füllt den durch das Außenrohr 34, den Tragstollen 18a, 18b und dem Außenrohr 34 begrenzten Raum fast vollständig aus. Hierdurch wird die Tunebarkeit der schwingenden Masse im Entkopplungskanal 30 bei konstanter Kanalgeometrie maximal.

Die Funktionsweise der Entkopplungseinrichtung 23 des Lagers 10' entspricht der zuvor beschriebenen Funktionsweise der Entkopplungseinrichtung 23 gemäß der ersten Ausführungsform.

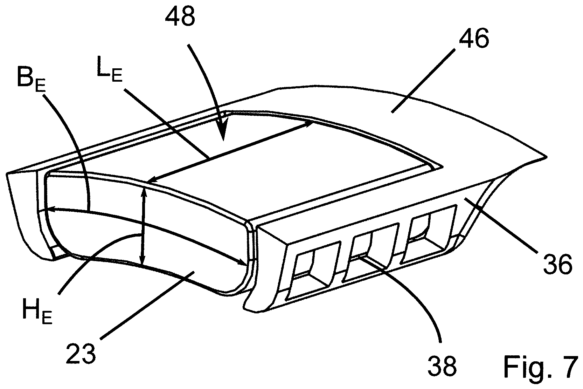

In Figur 7 ist eine zweite Ausführungsform des Entkopplungskäfigs 46 gezeigt. Der Entkopplungskäfig 46 weist eine Aussparung 48 auf, die der Innenwand des Au-ßenrohrs 34 zugewandt ist.

Die Entkopplungseinrichtung 23 schwimmt somit in axialer Richtung in dem Fluid 24 direkt zwischen dem Fensterrohr 25 und dem Außenrohr 34, wird aber weiterhin in Umfangsrichtung U durch den Entkopplungskäfig 32 begrenzt.

### Bezugszeichenliste

- 10, 10': Hydraulisch dämpfendes Lager
- 12: Lagerkern
- 14: Tragfeder
- 18a, 18b: Tragstollen
- 20: erste Kammer
- 22: zweite Kammer
- 23: Entkopplungseinrichtung
- 24: Fluid
- 25: Fensterrohr
- 26: Dämpfungskanal
- 30: Entkopplungskanal
- 32: Entkopplungskäfig
- 33: Ring
- 34: Außenrohr
- 35: Ring
- 36: Gitterwand
- 37: Steg
- 38: Durchflussöffnung
- 39: Steg
- 40: Anströmseite
- 42a, 42b: Führungsnuten
- 44a, 44b: Führungsstege
- 46: Entkopplungskäfig
- 48: Aussparung
- B_{E}: Breite der Entkopplungseinrichtung
- L_{E}: Länge der Entkopplungseinrichtung
- H_{E}: Höhe der Entkopplungseinrichtung
- L_{K}: Länge des Entkopplungskanals
- B_{K}: Breite des Entkopplungskanals
- B_{C}: Breite des Innenraums des Entkopplungskäfigs
- F: Richtung der Fluidströme
- U: Umfangsrichtung

## Patentansprüche

1. Hydraulisch dämpfendes Lager (10, 10') mit einem Lagerkern (11) und einem Außenrohr (34), wobei sich der Lagerkern (11) über eine Tragfeder (14) aus einem elastomeren Material an dem Außenrohr (34) abstützt, wobei die Tragfeder (14) einen zwischen dem Lagerkern (11) und dem Außenrohr (34) gebildeten Raum in wenigstens zwei mit einem Fluid (24) gefüllte Kammern (20, 22) unterteilt, die über wenigstens einen Dämpfungskanal (26) und wenigstens einen Entkopplungskanal (30) fluidleitend miteinander verbunden sind, wobei in dem Entkopplungskanal (30) wenigstens eine verwindungssteife, plättchenförmige Entkopplungseinrichtung (23) angeordnet ist, die durch Fluidströme hin und her bewegbar ist, und wobei die Entkopplungseinrichtung (23) derart ausgebildet ist, dass während einer fluidbedingten Bewegung der Entkopplungseinrichtung (23) deren Anströmseiten (40) stets den Fluidströmen zugewandt sind, **dadurch gekennzeichnet, dass** die Entkopplungseinrichtung (23) quer zur Richtung der Fluidströme (F) eine Höhe (H_{E}) und eine Länge (L_{E}) und in Richtung der Fluidströme (F) eine Breite (B_{E}) aufweist, wobei die Länge (L_{E}) und die Breite (B_{E}) der Entkopplungseinrichtung (23) größer als die Höhe (H_{E}) der Entkopplungseinrichtung (23) ist.

2. Hydraulisch dämpfendes Lager (10, 10') nach Anspruch 1, **dadurch gekennzeichnet, dass** dass die Breite (B_{E}) der Entkopplungseinrichtung (23) mindestens doppelt so groß wie die Höhe (H_{E}) der Entkopplungseinrichtung (23) ist.

3. Hydraulisch dämpfendes Lager (10, 10') nach einem der vorhergehenden Ansprüche, **dadurch gekennzeichnet, dass** die Länge (L_{E}) der Entkopplungseinrichtung (23) mindestens dreimal so groß wie die Höhe (H_{E}) der Entkopplungseinrichtung (23) ist.

4. Hydraulisch dämpfendes Lager (10, 10') nach einem der vorhergehenden Ansprüche, **dadurch gekennzeichnet, dass** der Entkopplungskanal (30) quer zur Richtung der Fluidströme (F) eine Breite (B_{K}) aufweist und die Entkopplungseinrichtung (23) quer zur Richtung der Fluidströme (F) eine Länge (L_{E}) aufweist, wobei die Länge (L_{E}) der Entkopplungseinrichtung (23) der Breite (B_{K}) des Entkopplungskanals (30) entspricht oder geringfügig kleiner ist.

5. Hydraulisch dämpfendes Lager (10, 10') nach einem der vorhergehenden Ansprüche, **dadurch gekennzeichnet, dass** die Entkopplungseinrichtung (23) in Richtung der Fluidströme (F) eine Breite (B_{E}) und der Entkopplungskanal (30) in Richtung der Fluidströme (F) eine Länge (L_{K}) aufweist, wobei das Verhältnis der Breite (B_{E}) der Entkopplungseinrichtung (23) zu der Länge (L_{K}) des Entkopplungskanals (30) zwischen ca. 0,3 bis ca. 1.0 beträgt, vorzugsweise zwischen ca. 0,45 bis ca. 0,75.

6. Hydraulische dämpfendes Lager (10, 10') nach einem der vorhergehenden Ansprüche, **dadurch gekennzeichnet, dass** die Entkopplungseinrichtung (23) einen Innenraum des Entkopplungskanals (30) fast vollständig ausfüllt.

7. Hydraulisch dämpfendes Lager (10, 10') nach einem der vorhergehenden Ansprüche, **dadurch gekennzeichnet, dass** in den Entkopplungskanal (30) ein Entkopplungskäfig (32, 46) eingebracht ist, in den die Entkopplungseinrichtung (23) aufgenommen ist.

8. Hydraulisch dämpfendes Lager (10,10') nach Anspruch 7, **dadurch gekennzeichnet, dass** die Entkopplungseinrichtung (23) den Innenraum des Entkopplungskäfigs (32, 46) fast vollständig ausfüllt.

9. Hydraulisch dämpfendes Lager (10,10') nach Anspruch 7 oder 8, **dadurch gekennzeichnet, dass** der Entkopplungskäfig (32, 46) und/oder die Entkopplungseinrichtung (23) eine dem Außenrohr (34) und/oder dem Lagerkern (12) angepasste Krümmung aufweist.

10. Hydraulisch dämpfendes Lager (10, 10') nach einem der vorhergehenden Ansprüche, **dadurch gekennzeichnet, dass** die Entkopplungseinrichtung (23) aus einem Metall und/oder aus einem Kunststoff, insbesondere aus einem integralen Polymerschaum oder einem mit Füllelementen gefüllten Polymercompound, hergestellt ist.

11. Hydraulisch dämpfendes Lager (10,10') nach einem der vorhergehenden Ansprüche, **dadurch gekennzeichnet, dass** die Entkopplungseinrichtung (23) als Hohlkörper ausgebildet ist und/oder dass die Entkopplungseinrichtung (23) aus einem Material hergestellt ist, das eine geschlossene Oberfläche und in seinem Inneren eine hohe Porigkeit aufweist.

12. Hydraulisch dämpfendes Lager (10, 10') nach einem der vorhergehenden Ansprüche, **dadurch gekennzeichnet, dass** in die Tragfeder (14) ein Fensterrohr (25) eingebracht ist, das aus zwei Ringen gebildet ist, die über wenigstens einen Steg miteinander verbunden sind, wobei der Entkopplungskanal (30) zwischen dem Steg und dem Außenrohr (34) gebildet ist, wobei vorzugsweise der Entkopplungskäfig (32, 46) in das Fensterrohr (25) und/oder die Tragfeder (14) integriert ist.

13. Hydraulisch dämpfendes Lager (10,10') nach Anspruch 12, **dadurch gekennzeichnet, dass** das Fensterrohr (25) und/oder das Außenrohr (34) und/oder die Tragfeder (14) mindestens einen Führungssteg (44a, 44b) in Umfangsrichtung U aufweist und die Entkopplungseinrichtung (40, 50) mindestens eine Führungsnut (42a, 42b) in Umfangsrichtung U aufweist, wobei der mindestens eine Führungssteg (44a, 44b) in die mindestens eine Führungsnut (42a, 42b) eingreift.

14. Hydraulisch dämpfendes Lager (10, 10') nach einem der vorhergehenden Ansprüche, **dadurch gekennzeichnet, dass** die Flächen der Entkopplungseinrichtung (23), die den Öffnungen des Entkopplungskanals (28) oder des Entkopplungskäfigs (32, 46) zugewandt sind, derart ausgebildet sind, dass sie in angeschlagener Endposition die Öffnungen des Entkopplungskanals (30) oder des Entkopplungskäfigs (32, 46) fluiddicht verschließen.

15. Hydraulisch dämpfendes Lager (10, 10') nach einem der vorhergehenden Ansprüche, **dadurch gekennzeichnet, dass** die Entkopplungseinrichtung (23) aus mehreren einzelnen, parallel geschalteten Entkopplungskanälen (28) mit je einem Entkopplungselement gebildet ist.

## Claims

1. Hydraulically damping mount (10, 10') with a mount core (11) and an outer tube (34), the mount core (11) being supported on the outer tube (34) via a suspension spring (14) made of an elastomeric material, the suspension spring (14) dividing a space between the mount core (11) and the outer tube (34) into at least two chambers (20, 22) filled with a fluid (24), which are connected to one another in a fluid-conducting manner via at least one damping channel (26) and at least one decoupling channel (30), at least one warp resistant platelet-shaped decoupling device (23) being provided in the decoupling channel (30) which can be moved back and forth by fluid flows, and the decoupling device (23) being designed in such a way that, during a fluid-induced movement of the decoupling device (23), its inflow sides (40) always face the fluid flows, **characterised in that** the decoupling device (23) has a height (H_{E}) and a length (L_{E}) perpendicular to the direction of the fluid flows (F) and has a width (B_{E}) in the direction of the fluid flows (F), wherein the length (L_{E}) and width (B_{E}) of the decoupling means (23) is greater than the height (H_{E}) of the decoupling means (23).

2. Hydraulically damping mount (10, 10') according to claim 1, **characterised in that** the width (B_{E}) of the decoupling device (23) is at least twice as large as the height (H_{E}) of the decoupling device (23).

3. Hydraulically damping mount (10, 10') according to one of the preceding claims, **characterised in that** the length (L_{E}) of the decoupling device (23) is at least three times as great as the height (H_{E}) of the decoupling device (23).

4. Hydraulically damping mount (10, 10') according to one of the preceding claims, **characterised in that** the decoupling channel (30) has a width (B_{K}) perpendicular to the direction of the fluid flows (F) and the decoupling device (23) has a length (L_{E}) perpendicular to the direction of the fluid flows (F), the length (L_{E}) of the decoupling device (23) corresponding to the width (B_{K}) of the decoupling channel (30) or being slightly smaller.

5. Hydraulically damping mount (10, 10') according to one of the preceding claims, **characterised in that** the decoupling device (23) has a width (B_{E}) in the direction of the fluid flows (F) and the decoupling channel (30) has a length (L_{K}) in the direction of the fluid flows (F), the ratio of the width (B_{E}) of the decoupling device (23) to the length (L_{K}) of the decoupling channel (30) being between approximately 0.3 and approximately 1.0, preferably between approximately 0.45 and approximately 0.75.

6. Hydraulic damping mount (10, 10') according to one of the preceding claims, **characterised in that** the decoupling device (23) almost completely fills an internal space of the decoupling channel (30).

7. Hydraulically damping mount (10, 10') according to one of the preceding claims, **characterised in that** a decoupling cage (32, 46), in which the decoupling device (23) is accommodated, is introduced into the decoupling channel (30).

8. Hydraulic damping mount (10, 10') according to claim 7, **characterised in that** the decoupling device (23) almost completely fills the internal space of the decoupling cage (32, 46).

9. Hydraulically damping mount (10, 10') according to claim 7 or 8, **characterised in that** the decoupling cage (32, 46) and/or the decoupling device (23) has a curvature adapted to the outer tube (34) and/or the bearing core (12).

10. Hydraulically damping mount (10, 10') according to one of the preceding claims, **characterised in that** the decoupling device (23) is produced from a metal and/or from a plastic, in particular from an integral polymer foam or a polymer compound filled with filling elements.

11. Hydraulically damping mount (10, 10') according to one of the preceding claims, **characterised in that** the decoupling device (23) is designed as a hollow body and/or **in that** the decoupling device (23) is made from a material which has a closed surface and a high porosity in its interior.

12. Hydraulically damping mount (10, 10') according to one of the preceding claims, **characterised in that** a window tube (25) which is formed from two rings which are connected to one another via at least one web is introduced into the suspension spring (14), the decoupling channel (30) being formed between the web and the outer tube (34), the decoupling cage (32, 46) preferably being integrated into the window tube (25) and/or the suspension spring (14).

13. Hydraulically damping mount (10, 10') according to claim 12, **characterised in that** the window tube (25) and/or the outer tube (34) and/or the suspension spring (14) has at least one guide web (44a, 44b) in the circumferential direction U and the decoupling device (40, 50) has at least one guide groove (42a, 42b) in the circumferential direction U, the at least one guide web (44a, 44b) engaging in the at least one guide groove (42a, 42b).

14. Hydraulically damping mount (10, 10') according to one of the preceding claims, **characterised in that** the surfaces of the decoupling device (23), which face the openings of the decoupling channel (28) or of the decoupling cage (32, 46), are designed in such a way that, in the abutted end position, they close the openings of the decoupling channel (30) or of the decoupling cage (32, 46) in a fluid-tight manner.

15. Hydraulically damping bearing (10, 10') according to one of the preceding claims, **characterised in that** the decoupling device (23) is formed from a plurality of individual, parallel-connected decoupling channels (28) each having a decoupling element.

## Revendications

1. Palier à amortissement hydraulique (10, 10'), comportant un noyau de palier (11) et un tube extérieur (34),
dans lequel
le noyau de palier (11) s'appuie contre le tube extérieur (34) par un ressort de support (14) en un matériau élastomère,
le ressort de support (14) subdivise le volume, formé entre le noyau de palier (11) et le tube extérieur (34), en au moins deux chambres (20, 22) remplies d'un fluide (24) et reliées l'une à l'autre de manière à conduire un fluide par au moins un canal d'amortissement (26) et par au moins un canal de découplage (30),
au moins un moyen de découplage (23) rigide en torsion et en forme de plaquette est agencé dans un canal de découplage (30) et est mobile en va-et-vient par des flux de fluide, et
le moyen de découplage (23) est réalisé de telle sorte que pendant un mouvement dû au fluide du moyen de découplage (23), ses côtés d'attaque (40) sont en permanence orientés vers les flux de fluide,
**caractérisé en ce que**
le moyen de découplage (23) présente une hauteur (H_{E}) et une longueur (L_{E}) transversalement à la direction des flux de fluide (F) et une largeur (B_{E}) en direction des flux de fluide (F), la longueur (L_{E}) et la largeur (B_{E}) du moyen de découplage (23) étant supérieures à la hauteur (H_{E}) du moyen de découplage (23).

2. Palier à amortissement hydraulique (10, 10') selon la revendication 1, **caractérisé en ce que**
la largeur (B_{E}) du moyen de découplage (23) est au moins le double de la hauteur (H_{E}) du moyen de découplage (23).

3. Palier à amortissement hydraulique (10, 10') selon l'une des revendications précédentes,
**caractérisé en ce que**
la longueur (L_{E}) du moyen de découplage (23) est au moins le triple de la hauteur (H_{E}) du moyen de découplage (23).

4. Palier à amortissement hydraulique (10, 10') selon l'une des revendications précédentes,
**caractérisé en ce que**
le canal de découplage (30) présente une largeur (B_{K}) transversalement à la direction des flux de fluide (F), et le moyen de découplage (23) présente une longueur (L_{E}) transversalement à la direction des flux de fluide (F), et la longueur (L_{E}) du moyen de découplage (23) correspond ou est légèrement inférieure à la largeur (B_{K}) du canal de découplage (30).

5. Palier à amortissement hydraulique (10, 10') selon l'une des revendications précédentes,
**caractérisé en ce que**
le moyen de découplage (23) présente une largeur (B_{E}) dans la direction des flux de fluide (F), et le canal de découplage (30) présente une longueur (L_{K}) dans la direction des flux de fluide (F), le rapport de la largeur (B_{E}) du moyen de découplage (23) sur la longueur (L_{K}) du canal de découplage (30) étant d'environ 0,3 à environ 1,0, de préférence d'environ 0,45 à environ 0,75.

6. Palier à amortissement hydraulique (10, 10') selon l'une des revendications précédentes,
**caractérisé en ce que**
le moyen de découplage (23) remplit presque complètement un volume intérieur du canal de découplage (30).

7. Palier à amortissement hydraulique (10, 10') selon l'une des revendications précédentes,
**caractérisé en ce que**
une cage de découplage (32, 46) est insérée dans le canal de découplage (30), dans laquelle est reçu le moyen de découplage (23).

8. Palier à amortissement hydraulique (10, 10') selon la revendication 7, **caractérisé en ce que**
le moyen de découplage (23) remplit presque complètement le volume intérieur de la cage de découplage (32, 46).

9. Palier à amortissement hydraulique (10, 10') selon la revendication 7 ou 8,
**caractérisé en ce que**
la cage de découplage (32, 46) et/ou le moyen de découplage (23) présente une courbure adaptée au tube extérieur (34) et/ou au noyau de palier (12).

10. Palier à amortissement hydraulique (10, 10') selon l'une des revendications précédentes,
**caractérisé en ce que**
le moyen de découplage (23) est réalisé en métal et/ou en une matière synthétique, en particulier en une mousse de polymère intégrale ou en un composite de polymère rempli d'élément de charge.

11. Palier à amortissement hydraulique (10, 10') selon l'une des revendications précédentes,
**caractérisé en ce que**
le moyen de découplage (23) est réalisé sous forme de corps creux, et/ou **en ce que**
le moyen de découplage (23) est réalisé en un matériau qui présente une surface fermée et une porosité élevée dans son intérieur.

12. Palier à amortissement hydraulique (10, 10') selon l'une des revendications précédentes,
**caractérisé en ce que**
dans le ressort de support (14) est inséré un tube formant fenêtre (25) qui est constitué par deux anneaux qui sont reliés entre eux par au moins une barrette, le canal de découplage (30) étant formé entre la barrette et le tube extérieur (34), et de préférence la cage de découplage (32, 46) est intégrée dans le tube formant fenêtre (25) et/ou dans le ressort de support (14).

13. Palier à amortissement hydraulique (10, 10') selon la revendication 12, **caractérisé en ce que**
le tube formant fenêtre (25) et/ou le tube extérieur (34) et/ou le ressort de support (14) présente au moins une barrette de guidage (44a, 44b) en direction périphérique U, et le moyen de découplage (40, 50) présente au moins une gorge de guidage (42a, 42b) en direction périphérique U, ladite au moins une barrette de guidage (44a, 44b) venant s'engager dans ladite au moins une gorge de guidage (42a, 42b).

14. Palier à amortissement hydraulique (10, 10') selon l'une des revendications précédentes,
**caractérisé en ce que**
les surfaces du moyen de découplage (23) qui sont tournées vers les ouvertures du canal de découplage (28) ou de la cage de découplage (32, 46) sont réalisées de manière à refermer de façon étanche aux fluides, dans la position finale en butée, les ouvertures du canal de découplage (30) ou de la cage de découplage (32, 46).

15. Palier à amortissement hydraulique (10, 10') selon l'une des revendications précédentes,
**caractérisé en ce que**
le moyen de découplage (23) est formé par plusieurs canaux de découplage (28) individuels agencés en parallèle et munis chacun d'un élément de découplage.
